# EUROPEAN PATENT SPECIFICATION

(11) **EP 0 375 738 B1**
(45) Date of publication and mention of the grant of the patent: **22.02.1995**
(21) Application number: 88908536.1
(22) Date of filing: 24.08.1988
(51) Int. Cl.: B32B 3/26, B32B 7/00, E21D 11/38

(54) **FIRE RESISTANT INSULATION COMPOSITION**
FEUERBESTÄNDIGE ISOLIERZUSAMMENSETZUNG
COMPOSITION D'ISOLATION IGNIFUGE

(30) Priority: 26.08.1987 GB 8720142
(43) Date of publication of application: 04.07.1990
(73) Proprietor: THE DOW CHEMICAL COMPANY, Midland Michigan 48640-1967 (US)
(72) Inventor: APOSTOLOPOULOS, Ioannis, D-7573 Sinzheim (DE)
(74) Representative: Casalonga, Axel
(86) International application number: US8802911
(87) International publication number: WO8901864

(56) References cited:
- EP-A- 0 182 624
- FR-A- 2 137 235
- FR-A- 2 262 168
- JA-A- 5 756 249
- US-A- 3 466 222
- US-A- 3 874 983
- US-A- 4 161 561
- US-A- 4 310 587
- US-A- 4 477 513

## Description

One of the problems frequently encountered in tunnels that are situated in areas subject to severe frost is the problem of ground water. Problems arise due to the fact that water leaks into the interior of the tunnel via a natural network of cracks and fissures and does not freeze dry. In winter when the temperature falls below 0°C, this continuous flow of water freezes and gradually builds up large ice columns that cover the walls and form massive icicles that are suspended from the ceiling, generally at or near the portal entrances. Even at temperatures that are slightly above freezing, differences in barometric pressures at each portal gives rise to a venturi effect in which strong cold winds sometimes result in a build-up of massive ice formations at the entrances of tunnels.

The formation of ice along tunnel walls and ditches often blocks drainage, causing water to spill onto the road or railroad track bed where it freezes. Driving becomes dangerous and the roadbeds, or tracks in the case of railroad tunnels, are difficult to maintain, especially in busy tunnels. In serious cases massive ice columns or icicle formations on tunnel roofs can cause tremendous loads pulling down electrical wires and support brackets causing serious hazards, particularly during periods of thaw.

Different methods have been employed to deal with these problems. Maintenance crews can be employed to hammer and chip away the ice, or to spray the ice with salt solutions. Such methods are costly in that they require the use of a large amount of manpower and cause corrosion or damage to the ecology. Alternatively, attempts to seal the cracks in tunnel walls by injecting chemicals or by caulking with sprayed concrete have also been employed. These methods are complicated, expensive, and to a large extent the results are uncertain. If one manages to establish a water-tight screen around a part or section of the tunnel, frequently the water pressure gradually builds up only to seep through somewhere else, in many cases adjacent to the cracks that have just been filled.

One of the simplest approaches to this problem is to utilize the warmth of the mountain interior in order to prevent the ground water from freezing. Thus, by maintaining the temperature of the ground water above freezing, it will drain normally into the drainage provided, thereby preventing damage to the tunnel interior caused by ground water freezing. This can be effectively accomplished by insulating the surface walls and ceiling of the tunnel interior.

Since the heat contained in the water is released upon exposure to the cold rock face and the cold exterior air, it follows that the volume of air between the rock surface and the insulation material should be kept to a minimum. It is therefore essential that the insulation material be flexible and to some extent capable of following the contours of the interior rock wall of the tunnel. In addition, the particular insulation material employed should have a very low heat conduction coefficient and at the same time be impervious to water. For economic reasons such a tunnel insulation material should also be easy to install and require little maintenance.

One of the best insulation materials, that has proved most successful in solving tunnel icing problems of this type, is an extruded closed cell polyethylene foam. Polyethylene foam has a low heat conductivity and absorbs a negligible amount or water, properties which it maintains at temperatures as low as ⁻40°C. It resists weathering and is strong enough to withstand slipstream pressures from wind, passing trucks or trains. It is resistant to minor mechanical damage and the flexibility of this material enables it to conform to the blasted rock surfaces of interior tunnel walls. It can be readily fabricated and its light weight and workability make it easy to install within tunnel confines, see "Polyethylene Foam Insulation Solves Icing Problem in Rocky Mountain Railway Tunnels" Sally Woods, Engineering Digest, pp 13-16, August 1985 (cf. preamble of claim 1 ).

One disadvantage, however, to the use or polyethylene foam is its flammability. Polyethylene foams can be made flame retardant by the addition of fire retardant additives. Generally, however, such fire retardant additives contain halogenated compounds, which release bromine and chlorine gases when burning. These gases are heavy and toxic and can be more hazardous than the fire itself in the case of a non-fire retardant treated foam. Thus, there is a need for a tunnel insulation material that has all of the advantages of polyethylene foam, including the insulation properties of polyethylene foam, but which is also fire resistant.

This invention relates to a fire resistant tunnel insulating composition. More particularly, this invention relates to a tunnel insulating composition for use in lining tunnels comprising a closed-cell flexible polyethylene foam layer characterized in that said layer is bonded to a metal sheet by means of a bonding agent having a melting temperature of approximately the same or a higher value as the melting temperature of said polyethylene foam to form a fire resistant insulating composition.

A second aspect of this invention relates to a method of applying the fire resistant tunnel insulating composition of the present invention to the interior of a tunnel.

Figure 1 is a cross sectional view of the fire resistant tunnel insulating composition of the present invention.

Figure 2 is a cross sectional view of a tunnel lined with the fire resistant tunnel insulating composition of the present invention.

A double lining of aluminum having a frost insulation material sandwiched between the aluminum sheets is known from "Insulated Panels for Protection Against Water and Frost", Krokeborg and Pedersen, Proceedings International Symposium, Oslo 1984, (TAPIR, Trondheim). The aluminum lining comprises essentially a heavy gauge foil, approximately 0.5 to 0.7 mm thick, which contains a mineral wool insulation in between the layers of aluminum foil. Such an insulation material has the disadvantage of tearing easily on the rough surface of a tunnel rock face, thereby exposing the insulation material to the rock wall surface. Mineral wool is not very suitable for use as a tunnel insulation material. Mineral wool rapidly absorbs water which subsequently freezes and destroys the insulation value of this material. Additionally, the aluminum foil layers melt at relatively low temperatures of approximately 660°C. In cases of a hot fire, the chances of the aluminum melting and causing the insulation to collapse and destroy or short-circuit power lines is high.

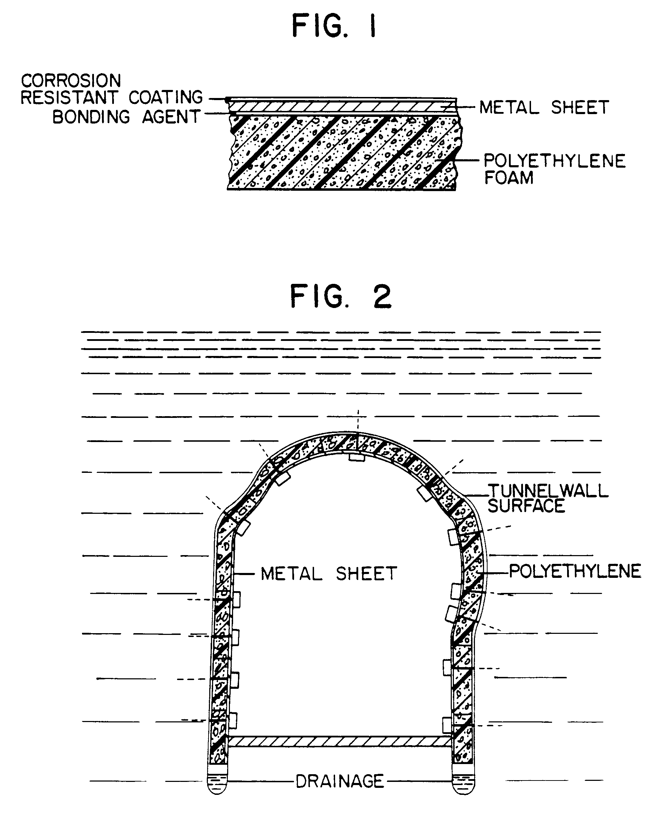

These problems can be overcome by utilizing the fire resistant tunnel insulating composition of this invention. Referring to the drawings, Figure 1 discloses a cross-section of the fire resistant insulating composition.

Closed cell polyethylene foams are conveniently available in the form of extruded planks that measure from 20 to 120 cm in width and from 0.2 to 5 meters in length. These planks are available in thicknesses of 30, 50, 70, 80 and 100 mm. The thickness of the particular planks that are employed is dependent upon the climate and the severity of winter conditions to which the tunnel is exposed. Normally, planks having a width of about 1 meter, a length of about 2 meters, and having a thickness of about 50 mm are employed. Inasmuch as this type of polyethylene foam material is constructed of millions of tiny closed cells, it has a high insulation capacity. It permits only negligible water or steam penetration, which makes it an excellent barrier for ground water. Polyethylene foam is sufficiently flexible and resilient so as to give and not tear on jagged rock wall surfaces. Moreover, polyethylene foams maintain their excellent properties over a wide range of temperatures ranging from ⁻40°C to 70°C. Thus, they can be installed over a wide range of ambient temperatures and numerous tunnels have been successfully insulated with polyethylene foam to prevent ground water from freezing on tunnel wall surfaces.

However, as with all thermoplastic foam materials, polyethylene foam will burn when exposed to a naked flame for a short period of time. Moreover, when large amounts of polyethylene foam burn, dense clouds of smoke are produced. The addition of fire retardant chemicals can be employed to make polyethylene foams more flame resistant. However, as indicated, these fire retardant additives generally contain halogen derivates that release toxic gases, such as bromine and chlorine, when burning. These toxic gases can be even more hazardous than the fire itself in a relatively confined area, such as, for example, in the middle of a long tunnel.

In order to avoid open flames from coming into direct contact with the polyethylene foam, a composite material or polyethylene laminate has been developed in which the surface of the polyethylene foam facing the tunnel interior is covered by a metal surface. The use of a metal sheet as a cover for combustible materials is not new. However, the bonding of a metal sheet to such a plastic foam material to form a fire resistant insulating composition is deemed to be novel. In some applications, it may be desirable to cover both surfaces of the polyethylene foam with a metal sheet, thereby forming a composite of polyethylene foam between two metal surface layers.

In accordance with the teachings of this invention, the metal surface or surfaces are bonded by means of a particular thermoplastic bonding agent or adhesive material that melts at approximately the same or at a higher temperature than that at which the polyethylene foam melts. Thus, laboratory tests have shown that when an exposed flame comes in direct contact with the surface of the composite metal sheet, the polyethylene foam does not de-laminate due to poor adhesion. Moreover, the polyethylene foam tends to shrink or melt away from the source of heat to form cavities or pockets behind the metal sheet, thereby minimizing the formation of drafts and subsequent burning.

Whereas non-ferrous metal sheets may be used for certain installations, the use of a steel sheet is preferred for the installation of fire resistant tunnel insulation materials. The thickness of the steel sheet can be from about 0.01 to 0.3 mm, and preferably is from about 0.02 to 0.2 mm so as to be flexible.

The length and width of the steel sheet is controlled by the length and width of the polyethylene planks employed. If a composite containing only a single outer steel layer is employed, the steel layer should include about 50 mm of additional steel sheet which overlaps each edge of the polyethylene plank. This overlap can be folded over to cover the edges of the polyethylene plank so that no polyethylene surface is exposed to the interior surface of the tunnel.

The bonding agent or adhesive layer can be comprised of a variety of materials, as long as it adheres satisfactorily to the steel sheet and to the polyethylene foam. It should also melt at approximately the same or at a higher temperature than the polyethylene foam, in order to enable the polyethylene foam to melt and pull away from the hot metal sheet when exposed to a direct source of heat, instead of delaminating from the metal sheet. In case of a major tunnel fire, this enables the polyethylene foam to form a liquid melt protected from an open flame by the steel layer. This melt can flow by gravity behind the steel layer into the ground drainage provided out of harm's way.

Suitable bonding agents include adhesive resins, such as ethylene vinyl alcohol and ethylene acrylic acid copolymer, with the latter being the adhesive resin of choice. The adhesive resin can be directly applied to the steel sheet by extruding the molten resin onto the metal sheet through a die at temperatures of about 210°C. The molten adhesive resin can be applied as a falling curtain directly onto the steel sheet as it passes continuously beneath the die opening. The rate of speed at which the steel sheet travels determines the thickness of the adhesive coating. At ambient temperatures, the adhesive layer is solid and tack free so that, for example, the adhesive-coated steel sheet can be rolled up into a coil and stored for future use.

The steel sheet containing the adhesive layer can then be laminated to the polyethylene foam plank by means of a hot air lamination technique. Hot air at about 150°C is blown directly against the adhesive-coated metal sheet to soften the adhesive layer. The softened, adhesive-coated steel sheet is firmly pressed against the polyethylene foam and cooled. Upon cooling the steel sheet remains firmly and flexibly bonded to the polyethylene foam. For polyethylene foam composites having two metal surface layers, the process of laminating the adhesive-coated steel sheet is repeated on the other side. The application of the adhesive resin to the steel sheet, the hot air bonding of the softened resin to the polyethylene foam, and the subsequent cutting of the laminated planks to their desired length can all be combined into a continuous operation having a through-put of finished composite material, ranging from about 0.5 to 2.0 meters per minute. Alternatively, the adhesive-coated steel sheets can be pre-prepared, stored, and subsequently bonded to the polyethylene foam as required.

Following the bonding of the steel sheets onto the polyethylene foam board, the exterior surface of the steel sheet is generally coated to prevent the steel from corrosion. Alternatively, one side of the steel sheet can be pre-coated with a protective coating, prior to the application of the adhesive resin on the opposite side. Any number of protective coatings or paint coatings known to those skilled in the art can be employed for this purpose.

Preferably, a paint coating is employed which is both corrosion resistant and fire resistant. Such a coating can be sprayed, brushed or rolled onto the metal sheet or onto the finished metal composite. The fire resistant coating should be such that it will not propagate a fire once it is ignited. Preferably, it should be of the type that will extinguish itself within a few minutes after direct flame contact has been removed. The paint composition should be flexible in order that no cracks or chipping of the paint coating will occur during handling and installation. Coatings that are chemically resistant to automobile exhaust gases, particularly sulfur dioxide, sulfur trioxide, nitrous oxides, carbon monoxide, carbon dioxide, and their corresponding acids are particularly desirable.

Illustrative of the paint coatings that may be employed are coating compositions comprising phenolic based resins, phenol-aldehyde resins, acrylic resins or epoxy resins. Epoxy resin based paint coatings form the coating of choice. In addition to good adherence they provide excellent corrosion resistant properties and can be formulated to impart varying degrees of fire resistance. Additionally, such film coatings can be made sufficiently elastic so as to prevent cracking and chipping of the coating during handling and installation. Another preferred corrosion resistant coating is an ethylene acrylic acid copolymer.

Fire resistant tunnel insulating composite planks, prepared in accordance with this invention, can be installed using simple techniques known to those skilled in the art. Thus, as seen in Figure 2, the polyethylene planks are joined at their long edges to form a mat. The width of the mat is equal to the length of the composite planks. The length of the individual mats should be composed of a sufficient number of planks so as to cover a major portion, or the whole cross-section, of a tunnel wall and ceiling. Preferable, the composite planks are edge-joined by means of a thermoplastic hot melt adhesive, as for example, a urethane elastomer. Such an adhesive is readily applied and retains sufficient flexibility, even in extreme hot or cold weather, so as not to crack or break during installation.

Mats formed in this fashion are fastened to the rock face wall by means of bolts that have been previously inserted into the rock face wall. Holes are drilled at right angles and the threaded bolts are inserted and permanently sealed in place by means of an epoxy resin. This serves to anchor the bolt in place and prevent ground water from leaking around each drilled hole. The bolts are so arranged that each composite plank of a mat is independently fastened to the rock face wall, thereby preventing the collapse of individual composite planks in case of a failure of the adhesive.

Such composite mats can be prepared outside of the tunnel entrance and transferred to the mounting site by sky-lift mounting vehicles. The mats are carefully centered and attached to the rock face tunnel wall by means of nuts and washer plates that are fastened onto the previously positioned bolts. The washer plates are approximately 200 cm² and have upturned edges so as not to scratch or cut into the treated fire resistant coating of the composite material. This process of preparing and installing mats is repeated with as many mats being installed as are necessary in order to cover the interior surface of the tunnel. The edges of each mat should overlap the edges of the adjacent mat from about 30 to 50 cm, so that absolutely no polyethylene foam is anywhere exposed to the interior surface of the tunnel. It is also important that no air circulate behind the mat to create drafts. Void spaces, including especially the portal edges of the mat, must be sealed by means of a fire resistant filler, such as mineral wool.

The following Example illustrates the fire resistant properties of a tunnel insulating composition in accordance with the present invention in comparison to the polyethylene foam of the prior art.

### EXAMPLE

Panels of a closed cell polyethylene foam, a closed-cell polyethylene foam that has been treated so as to be fire resistant, a polyethylene foam composite that has been bonded to a steel sheet having a corrosion resistant and partially fire resistant coating on its exterior surface, and a polyethylene foam composite that has been bonded to a steel sheet having a corrosion and fire resistant coating on its exterior surface are individually placed in an upright position. A Bunsen burner is inclined at a 45° angle and placed so that the flame is in direct contact with a spot located about 5 cm from the base of each test panel. At the hottest point of flame attack, temperatures of 900 to 920°C are recorded by means of a Technoterm 9500 thermometer.

All of the samples comprise a closed cell polyethylene extruded foam having dimensions of 25 cm in width, 30 cm in length and 5 cm in thickness. The polyethylene foam composite is coated with two different corrosion resistant epoxy coatings: (1) a corrosion resistant coating having fire retardant properties, and (2) a corrosion resistant coating having improved fire retardant properties. The compositions of these corrosion resistant coatings are as follows:

### Composition (1)

| | | |
|---|---|---|
| (a) | A high bromine (20-21 percent), low molecular weight epoxy resin in an acetone solution (80 percent solids), having an epoxide equivalent weight of 480 to 560 based on resin solids; | 100 parts |
| (b) | A high molecular weight polyamide hardener having a weight average molecular weight of 285,000. | 52 parts |

### Composition (2)

| | | |
|---|---|---|
| (a) | A low molecular weight solid brominated epoxy resin having an epoxide equivalent weight of 440 to 470, a softening point of 78-85°C and a bromine content of 47 to 51 percent by weight; | 80 parts |
| (b) | A low molecular weight epoxy resin in a xylene solution (75 percent solids) having an epoxide equivalent weight of 435 to 550 based on resin solids and a softening point of 71 to 84°C; | 20 parts |
| (c) | A high molecular weight polyamide hardener having a weight average molecular weight of 285,000. | 52 parts |

The viscosities of the final compositions can be adjusted with additional solvent to permit the type of application desired, i.e., spraying, brushing or rolling.

Table I describes the nature of the test samples prepared and the results obtained.

**TABLE I**

| Sample | Polyethylene Foam* | Fire Resistant Polyethylene Foam* | Protective Steel Sheet Bonded to Polyethylene Foam | |
|---|---|---|---|---|
| Coating | none | none | (1) | (2) |
| Time for coating to ignite | - | - | 15 sec | 15 sec |
| Burn - maximum flames | - | - | 1 min | 1 min |
| Fire self-extinguishes | - | - | 3 min | 2 min |

| Polyethylene Foam | | | | |
|---|---|---|---|---|
| Foam melting and chipping | yes | yes | no | no |
| Burn - maximum flames | 2 min | 1 min 15 sec | no fire | no fire |
| Fire self-extinguishes | no | > 2 min | no fire | no fire |
| Molten burning pool | yes | no | no | no |

| | | | | |
|---|---|---|---|---|
| * average of two samples | | | | |

- Comments:: Sample 1 - Active burning of a pool of molten foam remaining - fire had to be extinguished.
Sample 2 - Large hole in test sample where the foam melted and burned - fire self-extinguished after removal of open flame.
Sample 3 - Metal coating scorched but remained intact. Polyethylene foam withdrew and melted away from point of hottest flame. No burning of any foam.
Sample 4 - Same as Sample 3.

## Claims

1. A tunnel insulating composition for use in lining tunnels comprising a closed-cell flexible polyethylene foam layer characterized in that said layer is bonded to a metal sheet by means of a bonding agent having a melting temperature of approximately the same or a higher value as the melting temperature of said polyethylene foam to form a fire resistant insulating composition.

2. A fire resistant tunnel insulating composition according to Claim 1 wherein the metal sheet is a steel sheet of from 0.01 mm to 0.2 mm in thickness.

3. A fire resistant tunnel insulation composition according to Claim 2 wherein the closed cell flexible polyethylene foam layer is bonded on both sides to said steel sheet.

4. A fire resistant tunnel insulation composition according to Claim 2 wherein the polyethylene foam layer is bonded to said steel sheet by means of an ethylene acrylic acid copolymer.

5. A fire resistant tunnel insulating composition according to Claims 2 or 3, further comprising a corrosion resistant coating on the outside surface of said steel sheet.

6. A fire resistant tunnel insulation composition according to Claim 5 wherein the corrosion resistant coating is ethylene acrylic acid copolymer.

7. A fire resistant tunnel insulating composition according to Claim 1 characterized in that the closed-cell flexible polyethylene foam layer is bonded by the bonding agent to a steel sheet having a thickness of from 0.01 mm to 0.2 mm to form a fire resistant insulating composition and further characterized by having a fire and corrosion resistant coating on the outside surface of said steel sheet.

8. A fire resistant composition according to Claim 7 wherein the bonding agent is an ethylene acrylic acid copolymer and the fire and corrosion resistant coating is an epoxy resin coating.

9. A method of applying a fire resistant tunnel insulating composition according to Claims 1-8 to the interior or a tunnel which comprises:
a) preparing said fire resistant tunnel insulating compositions in the form of planks having dimensions in width of from 20 to 120 cm and in length of from 0.2 to 5 m;
b) joining the long edges of said planks together to form a mat;
c) inserting and anchoring bolts into the tunnel rock face ceiling and walls, and
d) fastening said mat to said bolts.

10. A method according to Claim 9 wherein the edges of said planks are joined by means of a hot melt glue.

## Patentansprüche

1. Tunnelisolierzusammensetzung zur Verwendung bei der Tunnelauskleidung, umfassend eine geschlossenzellige flexible Polyethylenschaumschicht, dadurch gekennzeichnet, daß diese Schicht an ein Metallblech mittels eines Klebmittels, das eine Schmelztemperatur von annähernd derselben oder einem höheren Wert als der Schmelztemperatur dieses Polyethylenschaumes hat, zur Ausbildung einer feuerbeständigen Isolierzusammensetzung geklebt ist.

2. Feuerbeständige Tunnelisolierzusammensetzung nach Anspruch 1, worin das Metallblech ein Stahlblech von 0,01 mm bis 0,2 mm Dicke ist.

3. Feuerbeständige Tunnelisolierzusammensetzung nach Anspruch 2, worin die geschlossenzellige flexible Polyethylenschaumschicht auf beiden Seiten an dieses Stahlblech geklebt ist.

4. Feuerbeständige Tunnelisolierzusammensetzung nach Anspruch 2, worin die Polyethylenschaumschicht an dieses Stahlblech mittels eines Ethylen-Acrylsäurecopolymeren geklebt ist.

5. Feuerbeständige Tunnelisolierzusammensetzung nach Anspruch 2 oder 3, weiter umfassend einen korrosionsbeständigen Überzug auf der Außenoberfläche dieses Stahlblechs.

6. Feuerbeständige Tunnelisolierzusammensetzung nach Anspruch 5, worin der korrosionsbeständige Überzug Ethylen-Acrylsäurecopolymeres ist.

7. Feuerbeständige Tunnelisolierzusammensetzung nach Anspruch 1, dadurch gekennzeichnet, daß die geschlossenzellige flexible Polyethylenschaumschicht mittels eines Klebmittels an ein Stahlblech mit einer Dicke von 0,01 mm bis 0,2 mm zur Ausbildung einer feuerbeständigen Isolierzusammensetzung geklebt ist, und weiter dadurch gekennzeichnet, daß sie einen feuer- und korrosionsbeständigen Überzug auf der Außenoberfläche dieses Stahlbleches besitzt.

8. Feuerbeständige Zusammensetzung nach Anspruch 7, worin das Klebmittel ein Ethylen-Acrylsäurecopolymeres ist und der feuer- und korrosionsbeständige Überzug ein Epoxyharzüberzug ist.

9. Verfahren zum Anbringen einer feuerbeständigen Tunnelisolierzusammensetzung nach den Ansprüchen 1 - 8 auf das Innere eines Tunnels, welches umfaßt:
a) Herstellen dieser feuerbeständigen Tunnelisolierzusammensetzungen in Form von Platten mit Abmessungen in der Breite von 20 bis 120 cm und in der Länge von 0,2 bis 5 m;
b) Miteinanderverbinden der langen Kanten dieser Platten zur Bildung einer Matte;
c) Einsetzen und Verankern von Bolzen in das Tunnelgestein an Decke und Wänden; und
d) Befestigen dieser Matte an diesen Bolzen.

10. Verfahren nach Anspruch 9, worin die Kanten dieser Platten mittels eines Heißschmelzklebers verbunden werden.

## Revendications

1. Composition pour isolation de tunnel, destinée à être utilisée pour revêtir des parois de tunnel et comprenant une couche de mousse souple de polyéthylène, à alvéoles fermées, caractérisée en ce que ladite couche est fixée à une feuille métallique, à l'aide d'un agent adhésif dont la température de fusion est à peu près identique ou supérieure à la température de fusion de ladite mousse de polyéthylène, de façon à constituer une composition d'isolation résistant au feu.

2. Composition pour isolation de tunnel, résistant au feu, conforme à la revendication 1, dans laquelle la feuille de métal est une feuille d'acier épaisse de 0,01mm à 0,2 mm.

3. Composition pour isolation de tunnel, résistant au feu, conforme à la revendication 2, dans laquelle une feuille d'acier est collée sur les deux faces de la couche de mousse souple de polyéthylène à alvéoles fermées.

4. Composition pour isolation de tunnel, résistant au feu, conforme à la revendication 2, dans laquelle la couche de mousse de polyéthylène est collée à ladite feuille d'acier à l'aide d'un copolymère d'éthylène et d'acide acrylique.

5. Composition pour isolation de tunnel, résistant au feu, conforme à la revendication 2 ou 3, qui comprend en outre, sur la surface extérieure de ladite feuille d'acier, un revêtement résistant à la corrosion.

6. Composition pour isolation de tunnel, résistant au feu, conforme à la revendication 5, dans laquelle le revêtement résistant à la corrosion est constitué d'un copolymère d'éthylène et d'acide acrylique.

7. Composition pour isolation de tunnel, résistant au feu, conforme à la revendication 1, caractérisée en ce que la couche de mousse souple de polyéthylène à alvéoles fermées est fixée, par l'agent adhésif, à une feuille d'acier épaisse de 0,01 mm à 0,2 mm, pour constituer une composition d'isolation résistant au feu, et caractérisée en outre en ce qu'elle comprend, sur la surface extérieure de ladite feuille d'acier, un revêtement résistant au feu et à la corrosion.

8. Composition résistant au feu, conforme à la revendication 7, dans laquelle l'agent adhésif est un copolymère d'éthylène et d'acide acrylique, et le revêtement résistant au feu et à la corrosion est un revêtement à base de résine époxy.

9. Procédé d'application d'une composition pour isolation de tunnel, résistant au feu, conforme à l'une des revendications 1 à 8, à l'intérieur d'un tunnel, lequel procédé comprend :
a) le fait de préparer des compositions pour isolation de tunnel, résistant au feu, du type susdit, sous la forme de planches de 20 à 120 cm de large sur 0,2 à 5 m de long;
b) le fait de joindre ces planches côte à côte pour former un panneau;
c) le fait d'insérer et d'ancrer des tiges dans les parois et le plafond rocheux du tunnel; et
d) le fait d'assujettir ledit panneau auxdites tiges.

10. Procédé conforme à la revendication 9, dans lequel les côtés desdites planches sont joints au moyen d'une colle thermofusible.
